# EUROPÄISCHE PATENTSCHRIFT

(11) **EP 1 218 624 B1**
(45) Veröffentlichungstag und Bekanntmachung des Hinweises auf die Patenterteilung: **26.11.2003**
(21) Anmeldenummer: 01980178.6
(22) Anmeldetag: 20.09.2001
(51) Int. Cl.: F01N 3/20, B01D 53/94

(54) **VORRICHTUNG ZUR DOSIERUNG EINES REDUKTIONSMITTELS**
DEVICE FOR DOSING A REDUCING AGENT
DISPOSITIF POUR DOSER UN AGENT DE REDUCTION

(30) Priorität: 22.09.2000 DE 10047512
(43) Veröffentlichungstag der Anmeldung: 03.07.2002
(73) Patentinhaber: ROBERT BOSCH GMBH, 70442 Stuttgart (DE)
(72) Erfinder: HUBER, Sven, 83395 Freilassing (DE); MAYER, Hanspeter, A-2753 Markt Piesting (AT); MOELL, Alexander, DECEASED (DE); MUELLER, Gerhard, 83395 Freilassing (DE); OFFENUBER, Michael, A-5421 Adnet (AT); MOELL, Brigitte, 78244 Gottmadingen (DE); MOELL, Helmut, 78244 Gottmadingen (DE)
(86) Internationale Anmeldenummer: DE0103620
(87) Internationale Veröffentlichungsnummer: WO02025074

(56) Entgegenhaltungen:
- EP-A- 0 586 913
- EP-A- 0 953 739
- EP-A- 1 149 991
- DE-A- 3 829 679
- US-A- 4 946 659
- US-A- 5 014 914
- US-A- 5 586 433
- US-A- 5 645 804
- US-A- 5 890 413
- US-A- 5 943 858

## Beschreibung

### Stand der Technik

Die Erfindung geht aus von einer Vorrichtung zur Dosierung eines Reduktionsmittels, insbesondere eines Harnstoffs bzw. einer Harnstoff-Wasser-Lösung im Rahmen einer katalytischen Abgasnachbehandlung, nach der Gattung des Hauptanspruchs.

Um eine Verminderung von NO_{X}-Bestandteilen in Abgasen zu erzielen, wurden insbesondere für Dieselmotoren Reduktionskatalysatoren entwickelt, die üblicherweise in sogenannte SCR-Katalysatoren (engl. "Selective Catalytic Reduction") und Speicherkatalysatoren unterteilt werden. Die sogenannten SCR-Katalysatoren werden mittels einer Harnstoff- und/oder Ammoniakreduktionsmittelzufuhr regeneriert, während die sogenannten Speicherkatalysatoren mit Kohlenwasserstoffen des mitgeführten Brennkraftmaschinen-Brennstoffs in sogenannten Abgasfettphasen regeneriert werden.

Aus der deutschen Patentanmeldung mit dem Aktenzeichen 199 46 900.8 ist eine Einrichtung bekannt, welche zum Entfernen von Stickoxiden in Abgasen beispielsweise aus einem Dieselmotor Harnstoff als Reduktionsmittel zudosiert. Hierfür ist eine Förderpumpe sowie ein Dosierventil vorgesehen. Herkömmliche als Dosierventile verwendete 2/2-Magnetventile sind für eine Direktmontage am Abgastrakt nicht ausreichend hitzebeständig beziehungsweise müssen mit Druckluftunterstützung betrieben werden.

Aus der EP 0586913 ist bekannt, zur Dosierung einer Harnstofflösung eine Dosierpumpe vorzusehen und die Harnstofflösung eine Verengung durchströmen zu lassen, bevor diese auf einen Katalysator trifft.

### Vorteile der Erfindung

Die erfindungsgemäße Dosiervorrichtung mit den kennzeichnenden Merkmalen des Hauptanspruchs hat demgegenüber den Vorteil, dass kein Einspritzventil mehr erforderlich ist, da eine insbesondere mit einem Schrittmotor antreibbare Dosierpumpe sowohl das Heranführen als auch das Dosieren des Reduktionsmittels bewerkstelligt. Eine geringere Zahl von Bauteilen und eine Verkleinerung der Baugröße der Dosiervorrichtung verringert den Montageaufwand, führt zu einer kompakten Bauweise und senkt die Herstellungs- und Systemkosten. Eine kleinere Zahl von Komponenten bedeutet auch eine kleinere Anzahl von Dichtstellen und somit eine erhöhte Betriebssicherheit hinsichtlich Leckagen. Eine Verringerung der Anzahl toleranzbehafteter Bauteile bedeutet auch eine Erhöhung der Dosiergenauigkeit. Es können federbelastete und verklebungsempfindliche Komponenten wie zum Beispiel Rückschlagventile entfallen. Die Blendenanordnung stellt trotz des kompakten Aufbaus der Dosiervorrichtung eine Spraybildung beziehungsweise eine Zerstäubung der dosierten Flüssigkeit sicher. Die Dosiervorrichtung kann darüber hinaus ohne Druckluftunterstützung betrieben werden. Besonders vorteilhaft ist es hierbei, Pumpenund/oder Blendenelemente aus hochtemperaturbeständigen Werkstoffen, insbesondere Keramiken, zu verwenden, so dass die Dosiervorrichtung direkt an die Abgasanlage beispielsweise eines Lastkraftwagens montiert beziehungsweise in ihr integriert werden kann.

Durch die in den abhängigen Ansprüchen und in der Beschreibung aufgeführten Maßnahmen sind vorteilhafte Weiterbildungen und Verbesserungen der im Hauptanspruch angegebenen Dosiervorrichtung möglich.

### Zeichnung

Ausführungsbeispiele der Erfindung sind in der Zeichnung dargestellt und in der nachfolgenden Beschreibung näher erläutert. Es zeigen
Figur 1 eine mit einem Wassertank, einem Harnstofftank und einer Katalysatoranordnung zusammengeschaltete Dosiervorrichtung,
Figur 2 eine entsprechende Anordnung mit einer alternativen Dosiervorrichtung, jedoch ohne Mitteln zur Luftzufuhr, und
Figur 3 die Detailansicht einer weiteren Ausführungsform der Erfindung.

### Beschreibung der Ausführungsbeispiele

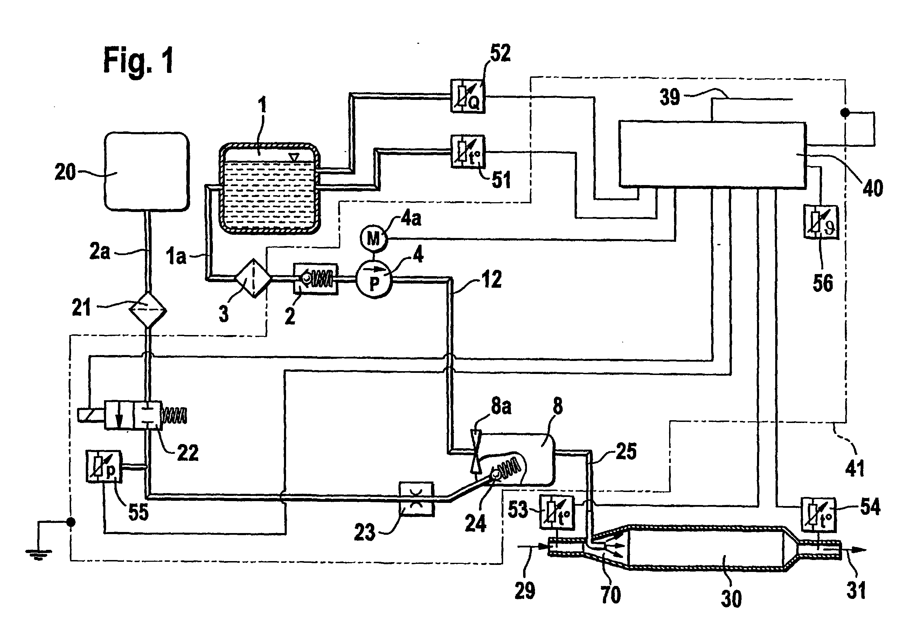

In Fig. 1 ist mit 1 ein Harnstofftank bezeichnet, aus welchem eine Harnstoff-Wasser-Lösung über eine Harnstoffleitung 1a mit Rückschlagventil 2 und einem als Filtersieb ausgeführtem Filter 3 von einer Dosierpumpe 4 angesaugt und zu einer Lochblende 8a einer Mischkammer 8 gefördert wird. Die Pumpe 4 ist über einen Schrittmotor 4a drehzahl- bzw. drehwinkelgesteuert. Aus einem Druckluftbehälter 20 ist Druckluft über eine Druckluftleitung 2a mit einem Filtersieb 21, einem 2/2-Wegeventil 22, einer Drossel 23 und ein Rückschlagventil 24 in die Mischkammer einbringbar. Eine Aerosolleitung 25 führt von der Mischkammer 8 zum Einlassbereich 70 der Katalysatoranordnung 30, die jenseits des Einlaßbereichs eine Abgaszufuhr 29 und auf der gegenüberliegenden Seite einen Abgasauslaß 31 aufweist. Der Harnstofftank 1 ist mit einem Füllstandsensor 52 und einem Temperatursensor 51 versehen. Temperatursensoren 53 und 54 messen die Temperatur des Abgases am Einlaß bzw. Auslaß des Katalysators 30. Ferner ist zwischen dem 2/2-Wegeventil 22 und der Drossel 23 ein Drucksensor 55 vorgesehen. Ein Temperatursensor 56 mißt die Temperatur eines metallischen Gehäuseblocks 41, auf dem die von der mit diesem Bezugszeichen versehenen strichmarkierten Linie umrandeten Komponenten angeordnet bzw. integriert sind. Auf dem Gehäuseblock 41 ist ferner ein Steuergerät 40 angebracht, das sowohl mit den Sensoren 50 bis 56 als auch mit dem Steuermotor 4a der Dosierpumpe 4 elektrisch verbunden ist. Der Gehäuseblock 41 ist geerdet, das Steuergerät 40 bezieht das elektrische Potential des Gehäuseblocks 41 als Referenzpotential. Über eine CAN-Datenleitung 39 (CAN ist eine Abkürzung für den englischen Ausdruck "Controlled Area Network") ist das Steuergerät 40 mit der Spannungsversorgung und weiteren elektronischen Komponenten im Kraftfahrzeug, insbesondere dem Motorsteuergerät, verbunden.

Die Dosierpumpe 4 dosiert die erforderliche Harnstoffwasserlösung durch die Lochblende 8a hindurch in die Mischkammer 8 ein. In der Mischkammer wird unter Beaufschlagung der Harnstoffwasserlösung mit Druckluft ein Aerosol und ein Wandfilm erzeugt, welches bzw. welcher über die Aerosolleitung 25 in den Katalysator 30 eingebracht wird. Das Steuergerät 40 erfaßt Daten über den Motorbetriebszustand, die von einem übergeordneten Motorsteuergerät über die CAN-Datenleitung 39 empfangen werden, sowie die Signale von Druck-, Temperatur- bzw. Füllstandsensoren 51 bis 56, welche an sich bekannt sind und hier nicht weiter erläutert werden. Das Steuergerät 40 berechnet aus den Sensorinformationen und den Informationen aus dem Motorsteuergerät eine Harnstoffdosiermenge, welche einem den Katalysator 30 durchströmenden Abgas zugegeben werden soll. Das Steuergerät 40 regelt mit Hilfe der Dosierpumpe 4 und dem 2/2-Wegeventil 22 den hierfür erforderlichen Harnstoff-Wasser-Lösungsdruck bzw. den Druck in der Druckluftleitung. Die Dosierung des Harnstoffs erfolgt also allein durch eine Lochblende hindurch mittels einer Dosierpumpe. Zwischen der Dosierpumpe und der Blendenanordnung ist kein weiteres die Reduktionsmittelzufuhr regelndes Element, beispielsweise ein Dosierventil, angeordnet, so daß die Dosierpumpe die Funktion der volumetrischen Zumessung der Harnstoff-Wasser-Lösung übernimmt, und die Lochblende unterstützt die Zerstäubung dieser Lösung in der Mischkammer.

Die Drosselblende 8a ist räumlich nahe an der Dosierpumpe 4 angeordnet, so dass das Rückschlagventil an der Druckseite der Pumpe das Entleeren der hydraulischen Leitung durch die Lochblende 8a verhindert. Bei größerem Abstand zwischen Dosierpumpe 4 und der Lochblende 8a oder bei Verwendung einer schlitzgesteuerten Dosierpumpe (ohne Rückschlagventile) kann ein (in Figur 1 nicht eingezeichnetes) Rückschlagventil, das unmittelbar vor der Lochblende 8a angeordnet ist, das Entleeren der Leitung durch die Lochblende 8a verhindern.

Alternativ kann die Dosiervorrichtung auch ohne Druckluftunterstützung verwendet werden, d.h. unter Weglassung der Bauteile 20 bis 24.

Alternativ kann zwischen der Dosierpumpe und der Blendenanordnung ein in Strömungsrichtung erst ab einem bestimmten Mindestdruck öffnendes Rückschlagventil angeordnet sein, so daß ein Entleeren der Leitung bei Stillstand der Pumpe durch die Drosselblende hindurch verhindert werden kann.

In einer weiteren alternativen Ausführungsform kann die Drosselblende als Ventil ausgebildet sein, so dass der Durchmesser der Lochblende variierbar ist.

Ferner kann zwischen der Dosierpumpe und der Blendenanordnung ein Drucksensor vorgesehen sein, der Informationen über den Leitungsdruck an das Steuergerät 40 übermittelt, das seinerseits diese Information zur Ansteuerung der Dosierpumpe verwerten kann.

In einer weiteren Variante kann zwischen der Dosierpumpe und der Blendenanordnung ein elektrisch betätigbares Abschaltventil vorgesehen sein.

Darüberhinaus ist es möglich, zwischen Dosierpumpe und Blendenanordnung ein 2/2-Wegeventil anzuordnen, über das die Harnstoffleitung entlüftet werden kann. Über das 2/2-Wegeventil kann auch mit der Leitung zwischen Dosierpumpe und Blendenanordnung eine Rücklaufleitung zum Harnstofftank gekoppelt sein, so dass ein eventuell vorhandener Überdruck abgebaut werden kann.

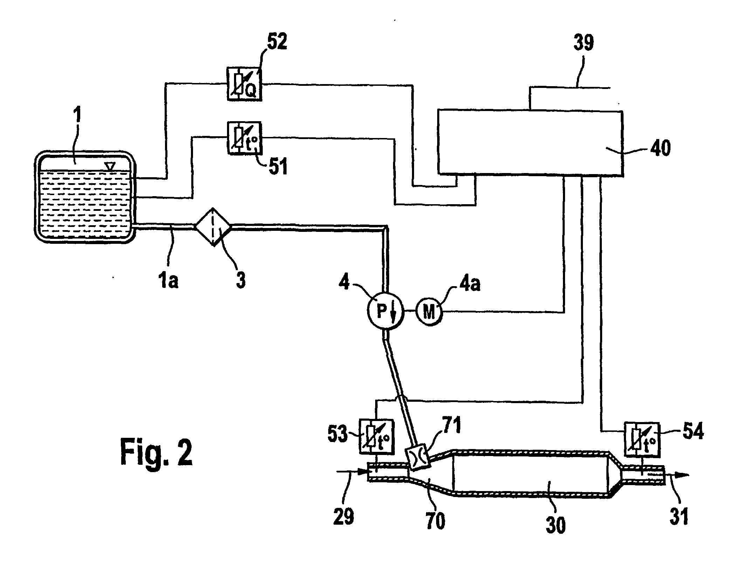

In Fig. 2 ist wie in Fig. 1 mit 1 ein Harnstofftank bezeichnet, aus welchem eine Harnstoff-Wasser-Lösung über eine Harnstoffleitung 1a mit einem als Filtersieb ausgeführten, am Harnstofftank angebrachten Filter 3 von einer Dosierpumpe 4 angesaugt und zu einer Drosselblende 71 des Einlaßbereichs 70 der Katalysatoranordnung 30 gefördert wird. Die Pumpe 4 ist über einen Schrittmotor 4a drehzahlgesteuert. Sie ist zusammen mit der Drosselblende am Einlaßbereich 70 befestigt.

Die Katalysatoranordnung 30 weist jenseits des Einlaßbereichs eine Abgaszufuhr 29 und auf der gegenüberliegenden Seite einen Abgasauslaß 31 auf. Der Harnstofftank 1 ist mit einem Füllstandsensor 52 und einem Temperatursensor 51 versehen. Temperatursensoren 53 und 54 messen die Temperatur des Abgases am Einlaß bzw. Auslaß des Katalysators 30. Ein elektronisches Steuergerät 40 ist sowohl mit den Sensoren 51, 52 und 54 als auch mit dem Steuermotor 4a der Dosierpumpe 4 elektrisch verbunden. Über eine CAN-Datenleitung 39 (CAN ist eine Abkürzung für den englischen Ausdruck "Controlled Area Network") ist das Steuergerät 40 mit der Spannungsversorgung und weiteren elektronischen Komponenten im Kraftfahrzeug, insbesondere dem Motorsteuergerät, verbunden.

Das Steuergerät 40 erfaßt analog zur Ausführungsform nach Figur 1 Daten über den Motorbetriebszustand, die von einem übergeordneten Motorsteuergerät über die CAN-Datenleitung 39 empfangen werden, sowie die Signale von Temperatur- bzw. Füllstandsensoren 51 bis 54. Das Steuergerät 40 berechnet aus den Sensorinformationen und den Informationen aus dem Motorsteuergerät die Harnstoffdosiermenge und regelt mit Hilfe der Dosierpumpe 4 den erforderlichen Harnstoff-Wasser-Lösungsdruck. Die Dosierpumpe 4 dosiert hierzu, vom durch das Steuergerät 40 angesteuerten Schrittmotor 4a angetrieben, die erforderliche Harnstoffwasserlösung durch die Drosselblende 71 hindurch direkt in den Einlaßbereich 70 ein. Die Drosselblende 71 unterstützt die Zerstäubung dieser Lösung in der Mischkammer.

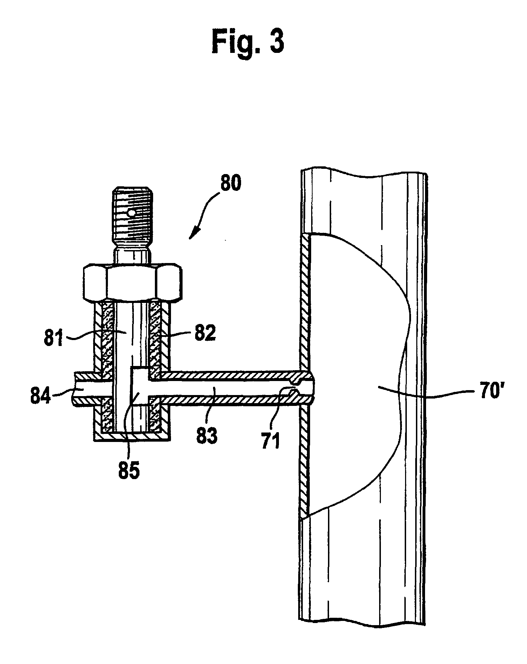

Figur 3 illustriert die Befestigung einer der Dosierpumpe 4 in Figur 2 entsprechenden schlitzgesteuerten Dosierpumpe 80 an einem zylindrisch ausgeführten Einlaßbereich 70' einer alternativen Katalysatoranordnung. Die Dosierpumpe ist über einen zylindrischen Auslaßkanal 83 mit dem Einlaßbereich verbunden, wobei am Ende des Auslaßkanals auf der Seite des Einlaßbereichs die Drosselblende 71 angeordnet ist. Die Dosierpumpe 80 ist ferner über den Einlaßkanal 84 mit einer Harnstoffleitung verbunden, die zum Harnstofftank 1 (vergleiche Figur 2) führt. Kernstück der Pumpe 4 ist ein zylindrischer Hubkolben 81 aus einem keramischen Werkstoff, der paßgenau innerhalb eines Keramikzylinders 82 rotierbar gelagert ist. Der Hubkolben weist eine Aussparung 85 auf. Als Werkstoff beispielsweise für den Keramikkolben und den Keramikzylinder finden Oxide wie Aluminiumoxid oder Zirkonoxid Verwendung.

Der rotierende Keramikkolben 81 führt zur Dosierung des Reduktionsmittels zyklische Hubbewegungen durch. Die Hubbewegung erfolgt in axialer Richtung der Dosierpumpe. Ein Materialtransport vom Einlaßkanal 84 in den Auslaßkanal 83 findet statt, wenn sich die Aussparung 85 in der Höhe der Kanäle 83 und 84 befindet. Die Aussparung 85 ist dabei so dimensioniert, daß sie, wenn sie dem Einlaßkanal gegenübersteht, von diesem mit Reduktionsmittel gefüllt werden kann, daß sie eine Viertelumdrehung weiter das erfaßte Reduktionsmittel voll umschließt und der Kolben die beiden Kanäle voneinander durchflußdicht trennt und daß eine weitere Viertelumdrehung weiter das mittels der Aussparung transportierte Volumen an den Auslaßkanal abgegeben werden kann. Die Dosierung erfolgt über die Drehzahl und/oder Winkelgeschwindigkeit des Keramikkolbens im Keramikzylinder und/oder über die Ansteuerung der Hubbewegung. Die in den Auslaßkanal 83 ausströmende Flüssigkeit gelangt schließlich über die Drosselblende 71 in den Einlaßbereich 70' der Katalysatoranordnung.

Zur Vermeidung einer Entleerung der flüssigkeitsgefüllten Leitung 83 durch die Lochblende 71 bei Stillstand der Dosierpumpe 80 kann zusätzlich direkt vor der Lochblende 71 ein in Durchflußrichtung öffnendes Rückschlagventil (in Fig.3 nicht dargestellt) angeordnet werden.

## Patentansprüche

1. Vorrichtung zur Dosierung eines Reduktionsmittels, insbesondere eines Harnstoffs beziehungsweise einer Harnstoff-Wasser-Lösung, mit Mitteln zur Zufuhr des Reduktionsmittels in eine Katalysatoranordnung (30) zur Entfernung von Stickoxiden aus den Abgasen insbesondere eines Dieselmotors, wobei die Mittel eine Dosierpumpe (4, 4a; 80, 4a) aufweisen und sich hinter der Dosierpumpe eine Blendenanordnung (8a, 71) zur Zerstäubung des Reduktionsmittels anschließt, durch die hindurch die Zufuhr erfolgen kann, wobei die Dosierung ausschließlich mittels der Dosierpumpe erfolgt, **dadurch gekennzeichnet, dass** der Pumpenkopf (81, 82) der Dosierpumpe (80) und die Blendenanordnung (8a; 71) aus thermisch hochbeständigen Werkstoffen, insbesondere aus Keramik, aufgebaut sind.

2. Vorrichtung nach Anspruch 1, **dadurch gekennzeichnet, dass** die Dosierpumpe (4, 4a; 80, 4a) mittels eines Schrittmotors (4a) ansteuerbar ist.

3. Vorrichtung nach einem der vorhergehenden Ansprüche, **dadurch gekennzeichnet, dass** die Dosierpumpe schlitzgesteuert arbeitet.

4. Vorrichtung nach einem der vorhergehenden Ansprüche, **dadurch gekennzeichnet, dass** die Blendenanordnung an einem Einlassbereich (70) der Katalysatoranordnung (30) angeordnet ist.

5. Vorrichtung nach Anspruch 4, **dadurch gekennzeichnet, dass** die Blendenanordnung eine Drosselblende (71) ist.

6. Vorrichtung nach einem der Ansprüche 1 bis 3, **dadurch gekennzeichnet, dass** die Blendenanordnung an einer Mischkammer (8) angeordnet ist, so dass das Reduktionsmittel zur Bildung eines Aerosols in die Mischkammer eingebracht werden kann.

7. Vorrichtung nach Anspruch 6, **dadurch gekennzeichnet, dass** die Blendenanordnug eine Lochblende ist.

8. Vorrichtung nach Anspruch 6 oder 7, **dadurch gekennzeichnet, dass** das Aerosol über eine Aerosolleitung (25) in einen Einlassbereich (70) der Katalysatoranordnung (30) einführbar ist.

9. Vorrichtung nach einem der Ansprüche 6 bis 8, **dadurch gekennzeichnet, dass** Mittel (20, 21, 22, 23, 24, 55) zur dosierten Luftzufuhr in die Mischkammer (8) vorgesehen sind.

10. Vorrichtung nach einem der vorhergehenden Ansprüche, **dadurch gekennzeichnet, dass** die Dosierpumpe (4, 4a; 80, 4a) an einem mit einer CAN-Datenleitung (39) verbindbaren Steuergerät (40) angeschlossen ist, so dass das Steuergerät die Dosierpumpe unter Verwertung der elektrischen Signale diverser Sensoren (51, 52, 53, 54, 55, 56) sowie an die CAN-Datenleitung angeschlossener Geräte, insbesondere eines Motorsteuergeräts, ansteuern kann.

11. Vorrichtung nach einem der vorhergehenden Ansprüche, **dadurch gekennzeichnet, dass** zwischen der Dosierpumpe und der Blendenanordnung ein Rückschlagventil angeordnet ist.

## Claims

1. Device for metering a reducing agent, in particular a urea or a urea-water solution, having means for feeding the reducing agent into a catalytic converter arrangement (30) for removing nitrogen oxides from the exhaust gases in particular from a diesel engine, the means having a metering pump (4, 4a; 80, 4a) and a diaphragm arrangement (8a, 71) for atomizing the reducing agent being connected downstream of the metering pump, through which diaphragm arrangement the feed can take place, the metering being effected exclusively by means of the metering pump, **characterized in that** the pump head (81, 82) of the metering pump (80) and the diaphragm arrangement (8a; 71) are composed of thermally highly stable materials, in particular of ceramic.

2. Device according to Claim 1, **characterized in that** the metering pump (4, 4a; 80 4a) can be actuated by means of a stepper motor (4a).

3. Device according to one of the preceding claims, **characterized in that** the metering pump operates under slot control.

4. Device according to one of the preceding claims, **characterized in that** the diaphragm arrangement is arranged at an inlet region (70) of the catalytic converter arrangement (30).

5. Device according to Claim 4, **characterized in that** the diaphragm arrangement is a throttle diaphragm (71).

6. Device according to one of Claims 1 to 3, **characterized in that** the diaphragm arrangement is arranged at a mixing chamber (8), so that the reducing agent can be introduced into the mixing chamber in order to form an aerosol.

7. Device according to Claim 6, **characterized in that** the diaphragm arrangement is a perforated diaphragm.

8. Device according to Claim 6 or 7, **characterized in that** the aerosol can be introduced into an inlet region (70) of the catalytic converter arrangement (30) via an aerosol line (25).

9. Device according to one of Claims 6 to 8, **characterized in that** there are means (20, 21, 22, 23, 24, 55) for metered feeding of air into the mixing chamber (8).

10. Device according to one of the preceding claims, **characterized in that** the metering pump (4, 4a; 80, 4a) is connected to a control unit (40) which can be connected to a CAN data line (39), so that the control unit can actuate the metering pump by evaluating the electrical signals from various sensors (51, 52, 53, 54, 55, 56) and appliances connected to the CAN data line, in particular an engine management system.

11. Device according to one of the preceding claims, **characterized in that** a nonreturn valve is arranged between the metering pump and the diaphragm arrangement.

## Revendications

1. Dispositif de dosage d'un agent réducteur notamment d'urée ou d'une solution aqueuse d'urée comprenant des moyens pour fournir l'agent réducteur à un dispositif catalyseur (30) pour éliminer les oxydes d'azote des gaz d'échappement notamment ceux d'un moteur diesel, les moyens comprenant une pompe de dosage (4, 4a ; 80, 4a) et en aval de la pompe de dosage, un dispositif à diaphragme (8a, 71) pour pulvériser l'agent réducteur pour assurer l'alimentation, le dosage se faisant exclusivement par la pompe de dosage,
**caractérisé en ce que**
la tête de pompe (81, 82) de la pompe de dosage (80) et le dispositif de diaphragme (8a, 71) sont réalisés en des matières thermiquement très réfractaires en particulier en matière céramique.

2. Dispositif selon la revendication 1,
**caractérisé en ce que**
la pompe de dosage (4, 4a ; 80, 4a) est commandée par un moteur pas à pas (4a).

3. Dispositif selon la revendication 1,
**caractérisé en ce que**
la pompe de dosage est commandée par fente.

4. Dispositif selon la revendication 1,
**caractérisé en ce que**
le dispositif à diaphragme est prévu dans une zone d'entrée (70) du dispositif catalyseur (30).

5. Dispositif selon la revendication 4,
**caractérisé en ce que**
le dispositif à diaphragme est un diaphragme d'étranglement (71).

6. Dispositif selon la revendication 1,
**caractérisé en ce que**
le dispositif à diaphragme est prévu contre une chambre de mélange (8) pour que l'agent réducteur puisse être introduit dans la chambre de mélange pour former un aérosol.

7. Dispositif selon la revendication 6,
**caractérisé en ce que**
le dispositif à diaphragme est un diaphragme à trou.

8. Dispositif selon la revendication 6 ou 7,
**caractérisé en ce que**
l'aérosol peut être introduit par une conduite d'aérosol (25) dans une zone d'entrée (70) du dispositif catalyseur (30).

9. Dispositif selon l'une des revendications 6 à 8,
**caractérisé par**
des moyens (20, 21, 22, 23, 24, 55) pour doser l'alimentation en air de la chambre de mélange (8).

10. Dispositif selon l'une des revendications précédentes,
**caractérisé en ce que**
la pompe de dosage (4, 4a ; 80, 4a) est reliée à un appareil de commande (40) avec une ligne de transmission de données CAN (39) de façon que l'appareil de commande puisse commander la pompe de dosage avec les signaux électriques de différents capteurs (51, 52, 53, 54, 55, 56) et les appareils reliés à la ligne de transmission de données CAN notamment un appareil de commande de moteur.

11. Dispositif selon l'une des revendications précédentes,
**caractérisé par**
un clapet anti-retour entre la pompe de dosage et le dispositif à diaphragme.
